# EUROPÄISCHE PATENTSCHRIFT

(11) **EP 3 957 823 B1**
(45) Veröffentlichungstag und Bekanntmachung des Hinweises auf die Patenterteilung: **08.11.2023**
(21) Anmeldenummer: 20191933.9
(22) Anmeldetag: 20.08.2020
(51) Int. Cl.: F01C 21/02, F01C 21/10, F04C 2/08, F04C 2/10, F04C 14/28, F04C 15/00

(54) **PUMPENANORDNUNG**
PUMP ARRANGEMENT
AGENCEMENT DE POMPE

(43) Veröffentlichungstag der Anmeldung: 23.02.2022
(73) Patentinhaber: GKN Sinter Metals Engineering GmbH, 42477 Radevormwald (DE)
(72) Erfinder: Tiller, Stefan, 53757 Sankt Augustin (DE); To, Hong Giang, 40231 Düsseldorf (DE); Malogowski, Tomasz, 25-817 Kielce (PL); Franceschi, Omar, CAP 44020 Masi Torello (Ferrara) (IT); Andree, Maurice, 47506 Neukirchen-Vluyn (DE)
(74) Vertreter: karo IP

(56) Entgegenhaltungen:
- EP-A2- 2 075 469
- DE-A1-102010 028 061
- DE-A1-102011 103 493
- DE-A1-102015 207 748
- DE-A1-102017 113 825
- DE-A1-102017 222 754
- DE-A1-102018 105 136

## Beschreibung

Die Erfindung betrifft eine Pumpenanordnung, zumindest umfassend eine Pumpe und eine Antriebseinheit für die Pumpe, die in einem gemeinsamen Gehäuse angeordnet sind. Die Antriebseinheit ist ein Axialfluss-Elektroantrieb, der einen mit dem Gehäuse drehfest verbundenen Stator sowie einen, gegenüber dem Gehäuse drehbar angeordneten Rotor umfasst. Der Rotor bildet ein äußeres Fördermittel der Pumpe und weist an einer Innenumfangsfläche ein erstes Förderprofil (z. B. eine erste Verzahnung oder Flügel einer Flügelzellenpumpe) auf, wobei in einer radialen Richtung innerhalb des Rotors ein inneres Fördermittel der Pumpe angeordnet ist, das an einer Außenumfangsfläche ein zweites Förderprofil (z. B. eine zweite Verzahnung oder eine zylindrische Außenumfangsfläche) aufweist, das mit dem ersten Förderprofil zur Förderung eines Fluids und ggf. (im Falle der Verzahnungen) zum Antrieb des inneren Fördermittels durch den Rotor zusammenwirkt.

Bei bekannten Pumpenausführungen ist ein Rotor der Pumpe auf einer Achse angeordnet, die aus einem Gehäuse der Pumpenanordnung herausgeführt ist.

Eine Pumpenanordnung ist z. B. aus der DE 10 2015 207 748 A1 bekannt. Dort wird eine Fluidpumpe beschrieben, die mit einem Elektromotor angetrieben wird. Dabei ist ein Pumpenrotor der Fluidpumpe mit dem Elektromotor gekoppelt. Der Elektromotor ist ein Axialfluss-Elektromotor, dessen Elektromotor-Rotor auch der Pumpenrotor ist bzw. einen Pumpenrotor antreibt. Der Pumpenrotor und der Elektromotor-Rotor sind in einem gemeinsamen Gehäuse untergebracht, in dem der Pumpenrotor und der Elektromotor-Rotor scheibenformartig als Kombinationsrotor integriert sich drehen, wobei das gemeinsame Gehäuse einen Fluidzu- und einen Fluidabfluss zu dem Kombinationsrotor aufweist. Ein Pumpenraum bzw.

Fluidförderraum ist im gemeinsamen Gehäuse abgeschlossen angeordnet und ein Fluidzufluss sowie ein Fluidabfluss zu dem Pumpenraum erfolgt axial entlang der Rotationsachse.

Aus der DE 10 2018 105 136 A1 ist ein Verfahren zum Betreiben einer Pumpenanordnung bekannt. Dabei wird ein Axialflussmotor beschrieben, dessen Rotor mit einem Fördermittel verbunden ist.

Die DE 10 2017 222 754 A1 ist auf eine Gerotorpumpe gerichtet. Der innere Gerotor bildet den Rotor.

Die DE 10 2011 103 493 A1 ist auf eine elektrische Maschine mit zwei Statoreinheiten und zwei Rotoreinheiten gerichtet.

Aus der DE 10 2010 028 061 A1 ist eine Flügelzellenpumpe bekannt, bei der an einer Stirnfläche des Rotor oder des Pumpengehäuses eine Vorrichtung zum Aufbau eines Drucks zwischen den Stirnflächen vorgesehen ist.

Die EP 2 075 469 A2 ist eine Flügelzellenpumpe bekannt, bei der an einer Stirnfläche des Rotor oder des Pumpengehäuses eine Vorrichtung zum Aufbau eines Drucks zwischen den Stirnflächen vorgesehen ist.

Es besteht ein ständiges Bedürfnis derartige Pumpen weiter zu vereinfachen und für den Betrieb robust und dauerhaltbar zu gestalten. Insbesondere soll eine kompakte Pumpenanordnung vorgeschlagen werden, die möglichst einfach herstellbar weitgehend verschleißfrei betreibbar ist.

Zur Lösung dieser Aufgaben trägt eine Pumpenanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Pumpenanordnung vorgeschlagen, zumindest umfassend eine Pumpe mit einer Druckseite und einer Saugseite und eine Antriebseinheit für die Pumpe, die in einem gemeinsamen Gehäuse angeordnet sind. Die Antriebseinheit ist ein Axialfluss-Elektroantrieb, der (genau) einen, mit dem Gehäuse drehfest verbundenen Stator sowie (genau) einen, gegenüber dem Gehäuse drehbar angeordneten Rotor umfasst. Der Rotor ist mit einer ersten Stirnseite dem Stator bzw. einem statorseitigen Gehäuse (also einem den Stator umfassenden Gehäuse) entlang einer axialen Richtung gegenüberliegend angeordnet und bildet ein äußeres Fördermittel der Pumpe. Das äußere Fördermittel weist an einer Innenumfangsfläche ein erstes Förderprofil auf. In einer radialen Richtung innerhalb des Rotors ist ein inneres Fördermittel der Pumpe angeordnet, das an einer Außenumfangsfläche ein zweites Förderprofil aufweist, das mit dem ersten Förderprofil zur Förderung eines Fluids zusammenwirkt. Die Fördermittel sind von der ersten Stirnseite beabstandet angeordnet. Das innere Fördermittel ist auf einem mit dem Gehäuse drehfest verbundenem Zentrierelement gelagert. Zumindest der Rotor und das äußere Fördermittel sind dazu eingerichtet, ausschließlich über das durch die Pumpe geförderte Fluid (gegenüber anderen Komponenten der Pumpenanordnung drehbar) gelagert zu sein. Zumindest zwischen der ersten Stirnseite und dem Stator (oder dem statorseitigen Gehäuse) ist eine erste Fluidleitstruktur angeordnet und mit der Druckseite verbunden, so dass im Betrieb der Pumpenanordnung ein Spalt zwischen der ersten Stirnseite und dem Stator (bzw. dem statorseitigen Gehäuse) durch das Fluid herstellbar ist.

Elektrische Antriebe umfassen regelmäßig einen Stator und einen Rotor, die koaxial zueinander angeordnet sind. Der Rotor wird hier als der Träger von Permanentmagneten bezeichnet, während der Stator eine Spulenanordnung aufweist. Bei einem Axialfluss-Motor sind Rotor und Stator insbesondere entlang der axialen Richtung hintereinander angeordnet. Dabei sind unterschiedlich magnetisierte Magnete entlang der Umfangsrichtung abwechselnd auf dem Rotor angeordnet.

Die Spulenanordnung eines Stators weist Kerne, z. B. aus SMC auf, die von stromführenden Wicklungen umfasst sind. Jeder Kern kann ein Element sein, das angeordnet ist, um magnetisiert zu werden, wenn ein Strom durch stromführende Wicklungen um den Kern geleitet wird. Die stromführenden Wicklungen können als Spulen gestaltet sein.

SMC ist insbesondere aus Eisenpulverteilchen gebildet, die elektrisch voneinander isoliert sind. Eisenverluste in SMC-Teilen in einem elektrischen Wechselfeld sind im Allgemeinen gering. In dieser Hinsicht erscheint es daher wünschenswert, SMC in elektrischen Maschinen zumindest teilweise anstelle der am häufigsten verwendeten Stahllamination (Stahlbleche bzw. Elektrostahl) zu verwenden. Um eine Komponente aus SMC zu bilden, werden die Partikel verdichtet und gehärtet. Das SMC-Material wird hierbei nicht gesintert. Vielmehr erfolgt eine Temperierung auf unterhalb einer Schmelztemperatur, die jedoch ausreichend ist, dass das Material die vorgesehene Geometrie dauerhaft bewahrt.

Der Rotor des elektrischen Antriebs kann Permanentmagnete oder auch weichmagnetische Elemente zum Beispiel in Aussparungen aufweisen. So kann mit Permanentmagneten als elektrischer Antrieb ein permanenterregter Synchron- oder bürstenloser Gleichstrommotor, abgekürzt BLDC, gebildet werden, während beispielsweise mit weichmagnetischen Elementen ein Reluktanzmotor als Elektromotor in axialer, radialer oder transversaler Bauweise geschaffen werden kann.

Rotor und Stator bilden zusammen insbesondere die Antriebseinheit der Pumpenanordnung.

Der Rotor weist an der Innenumfangsfläche ein erstes Förderprofil (z. B. die erste Verzahnung) auf, über die das innere Fördermittel mit dem, an der Außenumfangsfläche des inneren Fördermittels angeordneten zweiten Förderprofil (z. B. einer zweiten Verzahnung) zur Förderung des Fluids zusammenwirkt. Bei der Ausbildung der Förderprofile als Verzahnungen wird das innere Fördermittel über das äußere Fördermittel angetrieben.

Ein eigener Antrieb des inneren Fördermittels, z. B. über eine Achse des inneren Fördermittels, ist nicht erforderlich. Rotor und inneres Fördermittel bilden insbesondere gemeinsam die Pumpe der Pumpenanordnung, die ein Fluid von einer Saugseite bzw. Niederdruckseite (Fluideinlass) hin zu einer Druckseite bzw. Hochdruckseite (Fluidauslass) fördert.

Für eine solche Pumpenanordnung sind z. B. Gerotorpumpen und Innenzahnradpumpen (auch als Sichelpumpen bezeichnet) geeignet. Beide Pumpentypen zeichnen sich durch parallele, aber in der radialen Richtung voneinander beabstandet angeordnete, Drehachsen der Verzahnung aufweisenden Rotoren aus (inneres Fördermittel und äußeres Fördermittel). Durch die miteinander in Eingriff stehenden Verzahnungen erfolgt der Antrieb des einen Fördermittels durch den Antrieb des anderen Fördermittels.

Als Pumpenanordnung sind ebenfalls Flügelzellenpumpen und Rollenzellenpumpen einsetzbar, wobei das äußere Fördermittel die gegenüber der Drehachse in einer radialen Richtung verschiebbaren Flügel bzw. Rollen als erstes Förderprofil umfasst. Das zweite Förderprofil wird z. B. durch eine zylindrische Außenumfangsfläche des inneren Fördermittels gebildet, die mit den Flügeln bzw. den Rollen zusammenwirkt.

Der Rotor und die Fördermittel sind insbesondere gleitgelagert angeordnet. Im Betrieb der Pumpenanordnung baut sich in der Gleitlagerung, insbesondere in der gegenüber der axialen Richtung wirkenden Lagerung, ein Fluidfilm auf, der die Reibung zwischen sich unterschiedlich bewegenden Bauteilen reduziert.

Der Rotor, insbesondere zusammen mit dem äußeren Fördermittel, ist insbesondere wellenlos ausgeführt bzw. ist gegenüber der radialen Richtung ungelagert bzw. nur gleitgelagert angeordnet.

Im Betrieb des Axialfluss-Elektroantrieb treten Kräfte in der axialen Richtung auf, die eine Anziehung des Rotors entlang der axialen Richtung hin zum Stator bewirken. Bei der hier für eine kompakte Pumpenanordnung vorgeschlagene Ausführung mit nur einem Stator können diese Kräfte dazu führen, dass der drehende Rotor den Stator bzw. das den Stator umgebende Gehäuse kontaktiert. Dieses Problem wird bei Pumpenanordnungen, bei denen der Rotor nicht auf einer Welle angeordnet bzw. gegenüber der radialen Richtung ungelagert angeordnet ist, noch verschärft, da der wellenlose Rotor im Betrieb leichter verkippen kann. Bei einer auch nur leicht windschiefen Anordnung des Rotors (die Stirnseiten des Rotors sind im Regelfall nicht wirklich senkrecht zur Drehachse herstellbar) kann ein nur lokaler Kontakt zwischen Rotor und Gehäuse bzw. Stator auftreten. Dabei kann durch den Rotor eine materialabtragende Einwirkung auf das Gehäuse bzw. den Stator erfolgen, durch die eine dauerhafte Beschädigung der Pumpenanordnung erfolgt und die Lebensdauer deutlich eingeschränkt werden kann.

Bei der vorliegenden Pumpenanordnung wird eine Verkippung des Rotors unter anderem insbesondere durch möglichst große Durchmesser der als Lager gegenüber der axialen Richtung wirkenden Flächen des Rotors verhindert bzw. reduziert.

Es wird hier vorgeschlagen, das zwischen der ersten Stirnseite des Rotors und dem Stator bzw. dem statorseitigen Gehäuse eine erste Fluidleitstruktur angeordnet und mit der Druckseite verbunden ist, so dass im Betrieb der Pumpenanordnung ein Spalt zwischen der ersten Stirnseite und dem Stator bzw. dem statorseitigen Gehäuse durch das Fluid herstellbar ist. Der durch die Pumpenanordnung auf der Druckseite eingestellte Druck des Fluids wird hier dafür verwendet, den Abstand entlang der axialen Richtung zwischen der ersten Stirnseite und dem Stator bzw. dem Gehäuse einzustellen und aufrechtzuerhalten.

Der Abstand zwischen dem elektromagnetischen Rotorteil (den Magneten) und dem elektromagnetischen Statorteil beträgt insbesondere ca. 0,5 mm und wird insbesondere nicht nennenswert durch das Fluid beeinflusst. Der Abstand, der sich bei Betrieb der Pumpenanordnung zwischen Rotor und Stator bzw. statorseitigem Gehäuse infolge des Fluids einstellt und den Spalt bildet, ist insbesondere ausschließlich dafür vorgesehen, Reibung zwischen den Bauteilen und damit Verschleiß zu verhindern. Der Spalt, also der durch das Fluid gebildete Abstand, ist insbesondere deutlich kleiner als der Abstand der elektromagnetischen Komponenten von Rotor und Stator.

Die erste Fluidleitstruktur umfasst insbesondere eine Kanalstruktur, die zumindest auf einer der den Spalt ausbildenden Oberflächen ausgebildet ist. Diese Oberflächen werden zumindest durch die erste Stirnseite des Rotors und durch die, der ersten Stirnseite gegenüberliegenden Wandung des Stators bzw. des Gehäuses gebildet. Insbesondere liegt also gerade kein Spalt mit konstantem Spaltmaß vor, sondern das Spaltmaß variiert lokal infolge der an zumindest einer Oberfläche ausgeführten Kanalstruktur. Über die Kanalstruktur kann das Fluid insbesondere zumindest entlang der radialen Richtung durch den Spalt (und über den Spalt hinweg) gefördert werden. Insbesondere wird dabei mindestens ein Strömungskanal für das Fluid bereitgestellt, entlang dem das Fluid durch den Spalt (und über den Spalt hinweg) gefördert wird.

Das Fluid soll insbesondere im Wesentlichen in den Spalt gefördert werden, um dort die Reibung zwischen Bauteilen zu reduzieren. Das Fördern des Fluides über den Spalt hinaus ist insbesondere nur ein technisch notwendiges Übel, um das Fluid in den Spalt hinein zu fördern. Insbesondere soll das Fluid nicht gezielt über den Spalt hinaus gefördert, sondern diese interne Leckage möglichst gering gehalten werden.

Insbesondere wird entlang der Erstreckung der ersten Fluidleitstruktur oder entlang der Kanalstruktur in dem Spalt ein im Wesentlichen konstanter Druck des Fluids bereitgestellt. Es liegen also insbesondere keine Drosselabschnitte entlang der ersten Fluidleitstruktur oder entlang eines Strömungskanals der Kanalstruktur vor, die einen stufenweisen oder kontinuierlichen Druckabfall bewirken. Dabei kann zwischen unterschiedlichen Strömungskanälen einer Kanalstruktur durchaus ein gedrosselter Druck vorliegen.

Insbesondere ist die Pumpenanordnung so ausgeführt, dass durch den im Betrieb der Pumpenanordnung erzeugte Druck des Fluids an der Druckseite, die zwischen Stator und Rotor wirkenden axialen Kräfte (gerade) kompensiert werden. Ggf. kann der in dem Spalt zwischen Rotor und Stator vorliegende Druck des Fluids über eine (regelbare oder konstante) Drossel eingestellt werden.

Insbesondere erstreckt sich der Rotor zwischen einer dem Stator zugewandten ersten Stirnseite und einer gegenüberliegend angeordneten zweiten Stirnseite entlang der axialen Richtung über eine erste Breite, wobei sich das erste Förderprofil und das zweite Förderprofil jeweils über eine geringere zweite Breite erstrecken. Die Förderprofile weisen insbesondere eine gleiche Breite auf, so dass die Stirnseiten von innerem Fördermittel und äußerem Fördermittel entlang der radialen Richtung miteinander fluchtend anordenbar sind.

Insbesondere wirkt das zweite Förderprofil mit dem ersten Förderprofil zum Antrieb des inneren Fördermittels zusammen, wobei das innere Fördermittel auf dem Zentrierelement drehbar gelagert ist. Dabei ist auch das innere Fördermittel ausschließlich über das durch die Pumpe geförderte Fluid gelagert.

Insbesondere wird der Spalt zwischen Rotor und Stator ausschließlich durch die erste Stirnseite des Rotors und nicht durch das äußere oder innere Fördermittel gebildet. Die Fördermittel sind entlang der axialen Richtung beabstandet von der ersten Stirnseite angeordnet. Die Fördermittel erstrecken sich insbesondere bis zur zweiten Stirnseite des Rotors. Der Rotor ist also insbesondere scheibenförmig ausgebildet. Die erste Fluidleitstruktur kann damit auf einer großen Fläche angeordnet werden, so dass mit dem Fluid über die große Fläche große axiale Kräfte, die im Betrieb des elektrischen Antriebs erzeugt werden, kompensiert werden können.

Insbesondere weist das Gehäuse an einer der ersten Stirnseite gegenüberliegend angeordneten zweiten Stirnseite des Rotors eine mit der Druckseite der Pumpenanordnung verbundene Druckleitung auf. Insbesondere ist die erste Fluidleitstruktur (ausschließlich) über das Zentrierelement und/oder über die Förderprofile mit der Druckleitung verbunden.

Insbesondere wird das Fluid ausgehend von der Druckleitung (ausschließlich) über das Zentrierelement hin zur ersten Fluidleitstruktur befördert.

Insbesondere weist der Rotor (nur) eine zumindest in der axialen Richtung sich erstreckende Durchgangsöffnung auf, über die Fluid ausgehend von der Druckleitung bzw. ausgehend von der Druckseite hin zur ersten Fluidleitstruktur förderbar ist. Insbesondere weist die Durchgangsöffnung einen größten Öffnungsquerschnitt auf, der höchstens zwei (2) %, bevorzugt höchstens ein (1) %, besonders bevorzugt höchstens 0,5 %, der Fläche der ersten Stirnseite des Rotors aufweist. Insbesondere ist die erste Fluidleitstruktur (ausschließlich) über die mindestens eine Durchgangsöffnung mit der Druckleitung verbunden.

Insbesondere ist das innere Fördermittel auf einer ersten äußeren Umfangsfläche des Zentrierelements drehbar gelagert, wobei eine zweite Fluidleitstruktur zur Verbindung der Druckleitung mit der ersten Fluidleitstruktur zumindest teilweise auf der ersten äußeren Umfangsfläche ausgebildet ist. Insbesondere kann so eine hydrodynamische oder eine hydrostatische Lagerung des inneren Fördermittels auf dem Zentrierelement realisiert werden.

Die zweite Fluidleitstruktur kann insbesondere nach Art der ersten Fluidleitstruktur ausgebildet sein, wobei die zweite Fluidleitstruktur zur Erzeugung eines parallel zur Drehachse verlaufenden Spalts zwischen Zentrierelement und innerem Fördermittel vorgesehen ist.

Insbesondere weist das Gehäuse an einer der ersten Stirnseite gegenüberliegend angeordneten zweiten Stirnseite des Rotors eine mit der Saugseite verbundene Saugleitung auf. Eine als Leckage zu bezeichnende Weiterleitung des Fluids aus der ersten Fluidleitstruktur erfolgt insbesondere über eine zweite äußere Umfangsfläche des Rotors hin zu der Saugleitung. Diese Leckage dient insbesondere zur Schmierung der einander gegenüberliegenden Oberflächen von Rotor und Gehäuse.

Mit der Pumpenanordnung kann ein Fluid durch die Förderprofile ausgehend von der Saugleitung hin zur Druckleitung gefördert werden. Die zur Schmierung und Lagerung der Komponenten und zur Sicherstellung des Spalts verwendete Menge des Fluids kann zumindest teilweise (als Leckage) von der Druckseite über den Spalt hin zur Saugseite (zurück-)strömen.

Insbesondere wird das Fluid ausgehend von der Druckleitung über das Zentrierelement und über die zweite Fluidleitstruktur sowie über die Durchgangsöffnung hin zur ersten Stirnseite des Rotors gefördert. Insbesondere wird das Fluid (dann, aber insbesondere nur als Leckage) entlang des Spalts zwischen erster Stirnseite und Stator und zumindest entlang der radialen Richtung über den Spalt hinweg nach außen gefördert. Das Fluid strömt (dann) über die zweite äußere Umfangsfläche des Rotors (also zwischen Gehäuse und Rotor) hin zur zweiten Stirnseite und zur dort angeordneten Saugseite.

Insbesondere sind der Rotor und das äußere Fördermittel zweiteilig ausgeführt, bevorzugt zweiteilig, also getrennt voneinander, hergestellt. Insbesondere sind Rotor und das äußere Fördermittel drehfest miteinander verbunden. Die Verbindung kann z. B. über Verbindungselemente hergestellt sein, z. B. über Passstifte, Verschraubungen, etc.).

Insbesondere sind zumindest im Betrieb der Pumpenanordnung rotierende Bauteile (Rotor, äußeres Fördermittel, inneres Fördermittel), der Pumpenanordnung gegenüber feststehenden Bauteilen (Gehäuse, Stator, Zentrierelement) der Pumpenanordnung kontaktfrei angeordnet. Insbesondere liegt zumindest im Betrieb der Pumpenanordnung kein mechanischer Kontakt zwischen rotierenden Bauteilen der Pumpenanordnung und feststehenden Bauteilen der Pumpenanordnung vor.

Insbesondere laufen alle rotierenden Bauteile im Fluid. Insbesondere wird durch das Fluid ein Kontakt zwischen rotierenden Bauteilen der Pumpenanordnung und feststehenden Bauteilen der Pumpenanordnung verhindert bzw. eine kontaktfreie Anordnung gewährleistet.

Insbesondere können Toleranzen der ansonsten hochpräzise herzustellenden Bauteile aufgeweicht werden, so dass Kosten für die Herstellung der Pumpenanordnung reduziert werden können. Die sonst erforderliche Rechtwinkligkeit zwischen Drehachse und erster Stirnseite ist hier insbesondere mit geringerer Genauigkeit auszuführen, da der Spalt zwischen Rotor und Gehäuse bzw. Stator über das Fluid gewährleistet wird.

Insbesondere sind bei dieser Pumpenanordnung die Parallelität der Stirnseiten des Rotors die verbliebenen wichtigen, sehr präzise auszuführenden Toleranzen. Diese können sehr viel kostengünstiger (z. B. durch Doppeldiskusschleifen) hergestellt werden.

Insbesondere ist zumindest der Rotor pulvermetallurgisch hergestellt. Insbesondere ist zumindest der Stator pulvermetallurgisch hergestellt. Insbesondere ist der Rotor auch sintertechnisch hergestellt.

### Bevorzugt ist die Pumpe

- eine Gerotorpumpe oder eine Innenzahnradpumpe (auch als Sichelpumpe bezeichnet) und das erste Förderprofil ist eine erste Verzahnung und das zweite Förderprofil eine zweite Verzahnung, wobei die Verzahnungen voneinander unterschiedliche Zähnezahlen aufweisen; oder
- eine Flügelzellenpumpe oder Rollenzellenpumpe;
wobei eine erste Drehachse des Rotors und eine zweite Drehachse des inneren Fördermittels zueinander parallel und in der radialen Richtung voneinander beabstandet angeordnet sind.

Insbesondere weist die Pumpenanordnung ausschließlich statische Dichtungen auf, also Dichtungen, die nur zwischen drehfest angeordneten Komponenten angeordnet sind. Damit kann eine sichere und dauerhafte Abdichtung durch ausschließlich statische Dichtungen gewährleistet werden.

Die Pumpenanordnung weist insbesondere die folgenden Betriebsparameter auf:
- Nennleistungsaufnahme in Watt:
   von 0 bis 2.000; bevorzugt von 50 bis 200;
- Nominaler maximaler Betriebsdruck in bar:
   von 0 bis 100; bevorzugt von 4 bis 12;
- Volumenleistung in Litern pro Minute:
   von 0 bis 50; bevorzugt von 3 bis 12;
- Drehzahl des Rotors in Umdrehungen pro Minute:
   von 0 bis 7.000; bevorzugt von 1.000 bis 4.000.

Der Spalt zwischen der ersten Stirnseite des Rotors (insbesondere nicht im Bereich der Magnete) und dem Gehäuse bzw. dem Stator, also insbesondere der das Gleitlager bildende Spalt bzw. der durch die erste Fluidleitstruktur gebildete Spalt, beträgt im Betrieb der Pumpenanordnung insbesondere mindestens 0,003 Millimeter, bevorzugt höchstens 0,1 Millimeter, besonders bevorzugt höchstens 0,05 Millimeter oder sogar höchstens 0,01 Millimeter.

Insbesondere beträgt der Spalt zwischen den Magneten und dem Gehäuse bzw. dem Stator mindestens 0,2 Millimeter, bevorzugt mindestens 0,3 Millimeter. Bevorzugt beträgt der Spalt in diesem Bereich höchstens 1,5 mm, besonders bevorzugt höchstens 1,0 mm, insbesondere 0,3 bis 0,7 mm Millimeter.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist darauf hinzuweisen, dass die Figuren und insbesondere die dargestellten Größenverhältnisse nur schematisch sind. Es zeigen:
- Fig. 1:: eine Pumpenanordnung in einer Explosionsdarstellung, in perspektivischer Ansicht;
- Fig. 2:: die Pumpenanordnung nach Fig. 1 in einer Seitenansicht im Schnitt; und
- Fig. 3:: den Rotor der Pumpenanordnung in einer perspektivischen Ansicht;
- Fig. 4:: die Pumpenanordnung in einer Seitenansicht im Schnitt mit dem Strömungsverlauf von der Druckseite zur ersten Stirnseite;
- Fig. 5:: einen Teil der Pumpenanordnung in einer perspektivischen Ansicht mit einem Teil des Strömungsverlaufs nach Fig. 4;
- Fig. 6:: einen Teil der Pumpenanordnung in einer perspektivischen Ansicht mit einem weiteren Teil des Strömungsverlaufs nach Fig. 4, der sich an den Strömungsverlauf nach Fig. 5 anschließt;
- Fig. 7:: einen Teil der Pumpenanordnung nach Fig. 4 in einer perspektivischen Ansicht;
- Fig. 8:: einen Teil der Pumpenanordnung in einer perspektivischen Ansicht mit dem Teil des Strömungsverlaufs nach Fig. 4 sowie einem weiteren Teil des Strömungsverlaufs, der sich an den Strömungsverlauf nach Fig. 6 anschließt; und
- Fig. 9:: die Pumpenanordnung nach Fig. 2 in einer perspektivischen Ansicht im Schnitt.

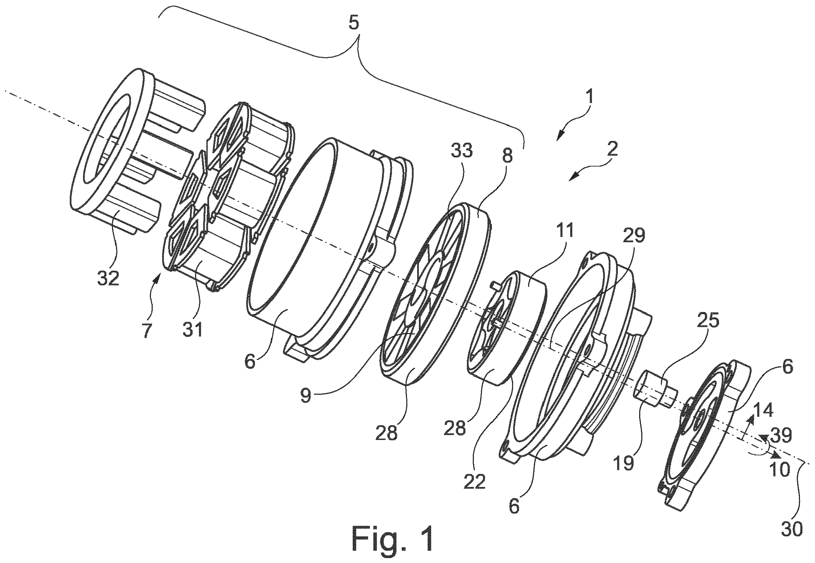

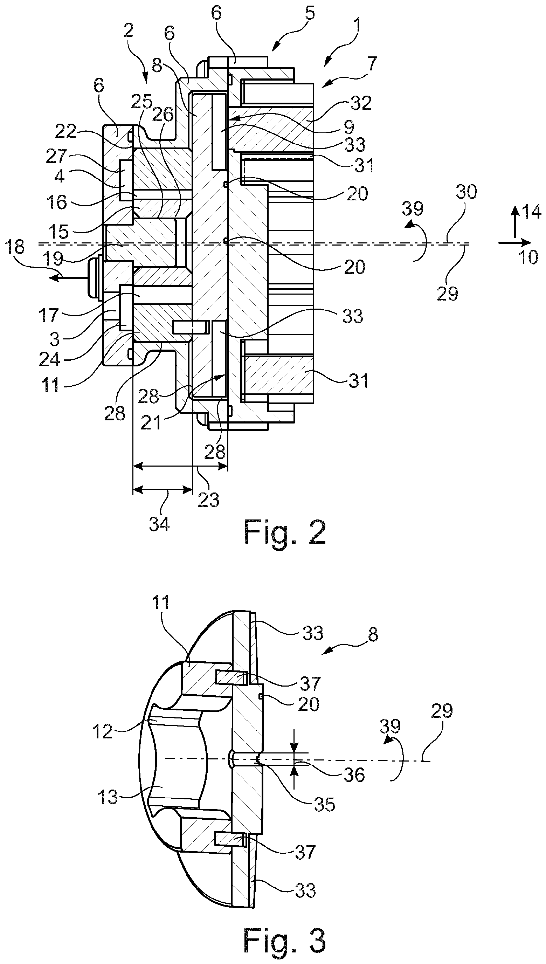

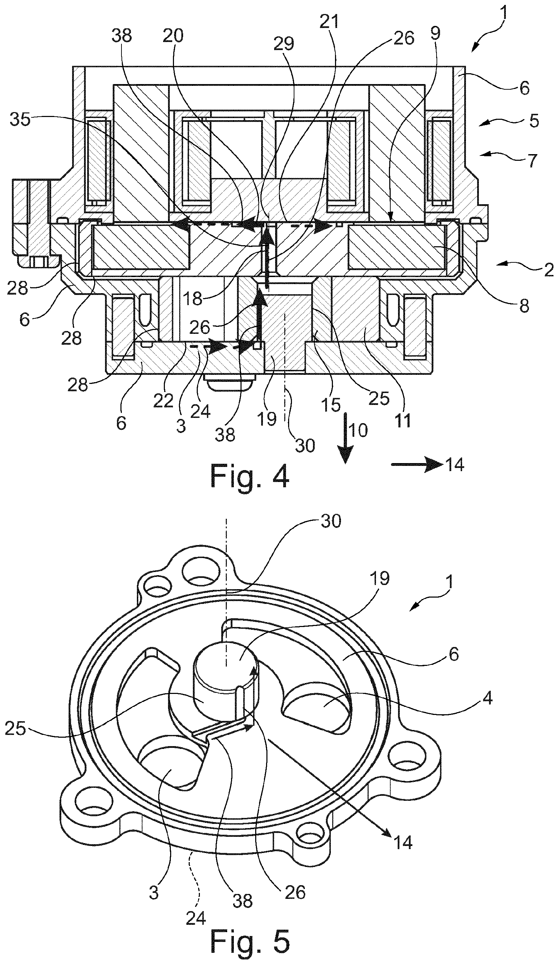

Die Fig. 1 zeigt eine Pumpenanordnung 1 in einer Explosionsdarstellung, in perspektivischer Ansicht. Fig. 2 zeigt eine Pumpenanordnung 1 in einer Seitenansicht im Schnitt. Fig. 3 zeigt den Rotor 8 der Pumpenanordnung 1 in einer perspektivischen Ansicht. Fig. 4 zeigt die Pumpenanordnung 1 in einer Seitenansicht im

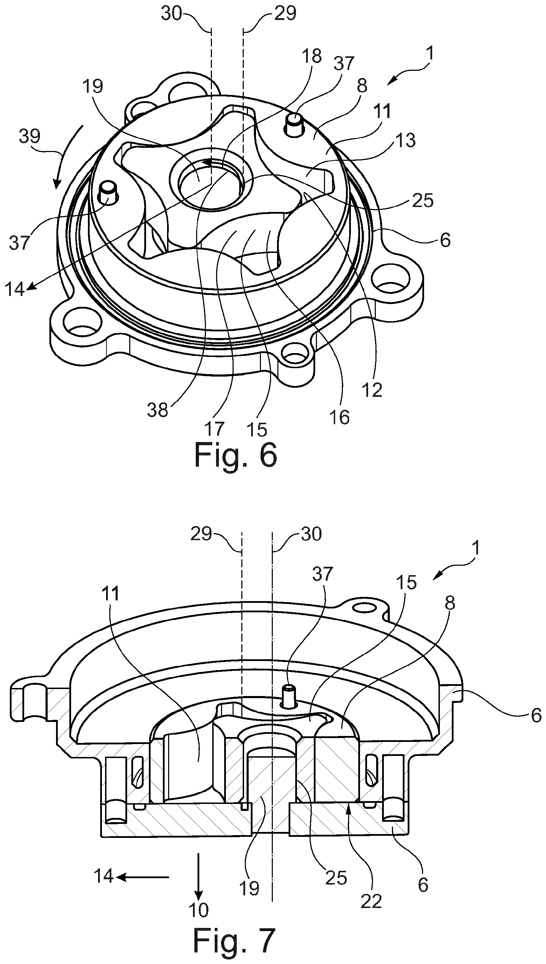

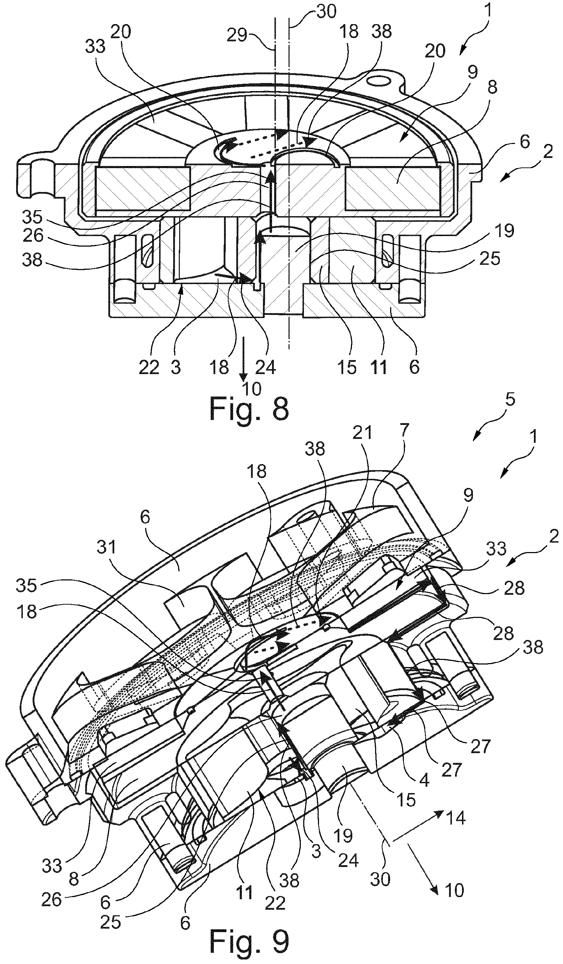

Schnitt mit dem Strömungsverlauf 34 von der Druckseite 3 zur ersten Stirnseite 9. Fig. 5 zeigt einen Teil der Pumpenanordnung 1 in einer perspektivischen Ansicht mit einem Teil des Strömungsverlaufs 34 nach Fig. 4. Fig. 6 zeigt einen Teil der Pumpenanordnung 1 in einer perspektivischen Ansicht mit einem weiteren Teil des Strömungsverlaufs 34 nach Fig. 4, der sich an den Strömungsverlauf 34 nach Fig. 5 anschließt. Fig. 7 zeigt einen Teil der Pumpenanordnung 1 nach Fig. 4 in einer perspektivischen Ansicht. Fig. 8 zeigt einen Teil der Pumpenanordnung 1 in einer perspektivischen Ansicht mit dem Teil des Strömungsverlaufs 34 nach Fig. 4 sowie einem weiteren Teil des Strömungsverlaufs 34, der sich an den Strömungsverlauf 34 nach Fig. 6 anschließt. Fig. 9 zeigt die Pumpenanordnung 1 nach Fig. 2 in einer perspektivischen Ansicht im Schnitt. Die Fig. 1 bis 9 werden im Folgenden gemeinsam beschrieben.

Die Pumpenanordnung 1 umfasst eine Pumpe 2 mit einer Druckseite 3 und einer Saugseite 4 und eine Antriebseinheit 5 für die Pumpe 2, die in einem gemeinsamen Gehäuse 6 angeordnet sind. Die Antriebseinheit 5 ist ein Axialfluss-Elektroantrieb, der genau einen, mit dem Gehäuse 6 drehfest verbundenen Stator 7 sowie genau einen, gegenüber dem Gehäuse 6 drehbar angeordneten Rotor 8 umfasst. Der Rotor 8 ist mit einer ersten Stirnseite 9 dem Stator 7 entlang einer axialen Richtung 10 gegenüberliegend angeordnet und bildet ein äußeres Fördermittel 11 der Pumpe 2. Das äußere Fördermittel 11 weist an einer Innenumfangsfläche 12 ein erstes Förderprofil 13 auf. In einer radialen Richtung 14 innerhalb des Rotors 8 ist ein inneres Fördermittel 15 der Pumpe 2 angeordnet, das an einer Außenumfangsfläche 16 ein zweites Förderprofil 17 aufweist, das mit dem ersten Förderprofil 13 zur Förderung eines Fluids 18 zusammenwirkt. Die Fördermittel 11, 15 sind beabstandet von der ersten Stirnseite 9 angeordnet. Das innere Fördermittel 15 ist auf einem mit dem Gehäuse 6 drehfest verbundenem Zentrierelement 19 gelagert. Der Rotor 8 und das äußere Fördermittel 11 sind ausschließlich über das durch die Pumpe 2 geförderte Fluid 18 gegenüber anderen Komponenten der Pumpenanordnung 1 drehbar gelagert. Zwischen der ersten Stirnseite 9 und dem Stator 7 ist eine erste Fluidleitstruktur 20 angeordnet und mit der Druckseite 3 verbunden, so dass im Betrieb des Elektroantriebs ein Spalt 21 zwischen der ersten Stirnseite 9 und dem Stator 7 durch das Fluid 18 herstellbar ist.

Die Spulenanordnung des Stators 7 weist Kerne 32, z. B. aus SMC auf, die von stromführenden Wicklungen 31 umfasst sind.

Der Rotor 8 des elektrischen Antriebs weist Magnete 33 auf. Kerne 32 und Wicklungen 31 sind gegenüber den Magneten 33 durch den Spalt 21 beabstandet angeordnet.

Der Rotor 8 weist an der Innenumfangsfläche 12 ein erstes Förderprofil 13 (hier eine erste Verzahnung) auf, über die das innere Fördermittel 15 mit dem, an der Außenumfangsfläche 16 des inneren Fördermittels 15 angeordneten zweiten Förderprofil 17 (hier eine zweiten Verzahnung) zur Förderung des Fluids 18 zusammenwirkt. Bei der Ausbildung der Förderprofile 13, 17 als Verzahnungen wird das innere Fördermittel 15 über das äußere Fördermittel 11 angetrieben. Eine erste Drehachse 29 des Rotors 8 (und des äußeren Fördermittels 11) und eine zweite Drehachse 30 des inneren Fördermittels 15 sind zueinander parallel und in der radialen Richtung 14 voneinander beabstandet angeordnet. Die Pumpe 2 ist als Gerotorpumpe ausgeführt.

Im Betrieb des Axialfluss-Elektroantriebs treten Kräfte in der axialen Richtung 10 auf, die eine Anziehung des Rotors 8 entlang der axialen Richtung 10 hin zum Stator 7 bewirken. Durch die zwischen der ersten Stirnseite 9 und dem Stator 7 angeordnete erste Fluidleitstruktur 20, die mit der Druckseite 3 verbunden ist, wird im Betrieb des Elektroantriebs ein Spalt 21 zwischen der ersten Stirnseite 9 und dem Stator 7 durch das Fluid 18 eingestellt. Der durch die Pumpenanordnung 1 auf der Druckseite 3 eingestellte Druck des Fluids 18 wird hier dafür verwendet, den Abstand entlang der axialen Richtung 10 zwischen der ersten Stirnseite 9 und dem Stator 7 bzw. dem Gehäuse 6 einzustellen und aufrechtzuerhalten.

Der Rotor 8 erstreckt sich zwischen einer dem Stator 7 zugewandten ersten Stirnseite 9 und einer gegenüberliegend angeordneten zweiten Stirnseite 22 entlang der axialen Richtung 10 über eine erste Breite 23, wobei sich das erste Förderprofil 13 und das zweite Förderprofil 17 jeweils über eine kleinere zweite Breite 34 erstrecken.

Der Spalt 21 zwischen Rotor 8 und Stator 7 wird ausschließlich durch die erste Stirnseite 9 des Rotors 8 und nicht durch die Fördermittel 11, 15 gebildet. Die Fördermittel 11, 15 sind entlang der axialen Richtung 10 beabstandet von der ersten Stirnseite 9 angeordnet. Die Fördermittel 11, 15 erstrecken sich bis zur zweiten Stirnseite 22 des Rotors 8. Der Rotor 8 ist scheibenförmig ausgebildet.

Der Rotor 8 weist eine sich in der axialen Richtung 10 erstreckende Durchgangsöffnung 35 auf, über die Fluid 18 ausgehend von der Druckleitung 24 bzw. ausgehend von der Druckseite 3 hin zur ersten Fluidleitstruktur 20 entlang des Strömungsverlaufs 38 förderbar ist (siehe Fig. 4, 8, 9). Die Durchgangsöffnung 35 weist einen größten Öffnungsquerschnitt 36 auf.

Das Gehäuse 6 weist an einer der ersten Stirnseite 9 gegenüberliegend angeordneten zweiten Stirnseite 22 des Rotors 8 eine mit der Druckseite 3 verbundene Druckleitung 24 auf, wobei die erste Fluidleitstruktur 20 über die Durchgangsöffnung 35 und das Zentrierelement 19 und/oder über die Förderprofile 13, 17 mit der Druckleitung 24 verbunden ist.

Das Fluid 18 wird ausgehend von der Druckleitung 24 über das Zentrierelement 19 und die Durchgangsöffnung 35 hin zur ersten Fluidleitstruktur 20 entlang des Strömungsverlaufs 38 befördert (siehe Fig. 4, 8, 9).

Das innere Fördermittel 15 ist auf einer ersten äußeren Umfangsfläche 25 des Zentrierelements 19 drehbar gelagert, wobei eine zweite Fluidleitstruktur 26 zur Verbindung der Druckleitung 24 mit der ersten Fluidleitstruktur 20 auf der ersten äußeren Umfangsfläche 25 ausgebildet ist (siehe Fig. 4 bis 6 und 8, 9).

Das Gehäuse 6 weist an einer der ersten Stirnseite 9 gegenüberliegend angeordneten zweiten Stirnseite 22 des Rotors 8 eine mit der Saugseite 4 verbundene Saugleitung 27 auf, wobei eine Leckage des Fluids aus der ersten Fluidleitstruktur 20 über eine zweite äußere Umfangsfläche 28 des Rotors 8 hin zu der Saugleitung 27 erfolgt (siehe Fig. 9).

Das Fluid 18 wird ausgehend von der Druckleitung 24 über das Zentrierelement 19 und über die zweite Fluidleitstruktur 26 sowie über die Durchgangsöffnung 35 und ggf. über die Förderprofile 13, 17 hin zur ersten Stirnseite 9 des Rotors 8 gefördert (siehe Fig. 4, 8 und 9). Dann wird das Fluid 18 entlang des Spalts 21 zwischen erster Stirnseite 9 und Stator 7 und zumindest entlang der radialen Richtung 14 durch den Spalt 21 und als Leckage über den Spalt 21 hinweg nach außen gefördert (siehe Fig. 4, 8, 9). Das Fluid 18 strömt dann als Leckage über die zweite äußere Umfangsfläche 28 des Rotors 8 (also zwischen Gehäuse 6 und Rotor 8) hin zur zweiten Stirnseite 22 und zur dort angeordneten Saugseite 4 (siehe Fig. 4 und 9).

Der Rotor 8 und das äußere Fördermittel 11 sind zweiteilig ausgeführt, also zweiteilig bzw. getrennt voneinander hergestellt. Rotor 8 (bzw. der scheibenförmige Teil des Rotors 8) und das äußere Fördermittel 11 sind drehfest miteinander zur Ausbildung des Rotors 8 verbunden. Die Verbindung wird über Verbindungselemente 37 hergestellt, hier über Passstifte.

Zumindest im Betrieb der Pumpenanordnung 1 sind rotierende Bauteile (Rotor 8, äußeres Fördermittel 11, inneres Fördermittel 15), der Pumpenanordnung 1 gegenüber feststehenden Bauteilen (Gehäuse 6, Stator 7, Zentrierelement 19) der Pumpenanordnung 1 kontaktfrei angeordnet. Alle rotierenden Bauteile werden damit im Fluid 18 bewegt. Durch das Fluid 18 wird ein Kontakt zwischen rotierenden Bauteilen der Pumpenanordnung 1 und feststehenden Bauteilen der Pumpenanordnung 1 verhindert bzw. eine kontaktfreie Anordnung gewährleistet.

### Bezugszeichenliste

- 1: Pumpenanordnung
- 2: Pumpe
- 3: Druckseite
- 4: Saugseite
- 5: Antriebseinheit
- 6: Gehäuse
- 7: Stator
- 8: Rotor
- 9: erste Stirnseite
- 10: axiale Richtung
- 11: äußeres Fördermittel
- 12: Innenumfangsfläche
- 13: erstes Förderprofil
- 14: radiale Richtung
- 15: inneres Fördermittel
- 16: Außenumfangsfläche
- 17: zweites Förderprofil
- 18: Fluid
- 19: Zentrierelement
- 20: erste Fluidleitstruktur
- 21: Spalt
- 22: zweite Stirnseite
- 23: erste Breite
- 24: Druckleitung
- 25: erste äußere Umfangsfläche
- 26: zweite Fluidleitstruktur
- 27: Saugleitung
- 28: zweite äußere Umfangsfläche
- 29: erste Drehachse
- 30: zweite Drehachse
- 31: Wicklung
- 32: Kern
- 33: Magnet
- 34: zweite Breite
- 35: Durchgangsöffnung
- 36: Öffnungsquerschnitt
- 37: Verbindungsmittel
- 38: Strömungsverlauf
- 39: Umfangsrichtung

## Patentansprüche

1. Pumpenanordnung (1), zumindest umfassend eine Pumpe (2) mit einer Druckseite (3) und einer Saugseite (4) und eine Antriebseinheit (5) für die Pumpe (2), die in einem gemeinsamen Gehäuse (6) angeordnet sind, wobei die Antriebseinheit (5) ein Axialfluss-Elektroantrieb ist, der einen, mit dem Gehäuse (6) drehfest verbundenen Stator (7) sowie einen, gegenüber dem Gehäuse (6) drehbar angeordneten Rotor (8) umfasst, wobei der Rotor (8) mit einer ersten Stirnseite (9) dem Stator (7) entlang einer axialen Richtung (10) gegenüberliegend angeordnet ist und ein äußeres Fördermittel (11) der Pumpe (2) bildet und an einer Innenumfangsfläche (12) ein erstes Förderprofil (13) aufweist, wobei in einer radialen Richtung (14) innerhalb des Rotors (8) ein inneres Fördermittel (15) der Pumpe (2) angeordnet ist, das an einer Außenumfangsfläche (16) ein zweites Förderprofil (17) aufweist, das mit dem ersten Förderprofil (13) zur Förderung eines Fluids (18) zusammenwirkt; **dadurch gekennzeichnet, dass** die Fördermittel (11, 15) von der ersten Stirnseite (9) beabstandet angeordnet sind; wobei das innere Fördermittel (15) auf einem mit dem Gehäuse (6) drehfest verbundenem Zentrierelement (19) gelagert ist; wobei zumindest der Rotor (8) und das äußere Fördermittel (11) dazu eingerichtet sind ausschließlich über das durch die Pumpe (2) geförderte Fluid (18) gelagert zu sein; wobei zumindest zwischen der ersten Stirnseite (9) und dem Stator (7) eine erste Fluidleitstruktur (20) angeordnet und mit der Druckseite (3) verbunden ist, so dass im Betrieb des Elektroantriebs ein Spalt (21) zwischen der ersten Stirnseite (9) und dem Stator (7) durch das Fluid (18) herstellbar ist.

2. Pumpenanordnung (1) nach Patentanspruch 1, wobei sich der Rotor (8) zwischen der dem Stator (7) zugewandten ersten Stirnseite (9) und einer gegenüberliegend angeordneten zweiten Stirnseite (22) entlang der axialen Richtung (10) über eine erste Breite (23) erstreckt, wobei sich das erste Förderprofil (13) und das zweite Förderprofil (17) jeweils über eine geringere zweite Breite (34) erstrecken, wobei die Förderprofile (13, 17) entlang der axialen Richtung (10) beabstandet von der ersten Stirnseite (9) angeordnet sind.

3. Pumpenanordnung (1) nach einem der vorhergehenden Patentansprüche, wobei das zweite Förderprofil (17) mit dem ersten Förderprofil (13) zum Antrieb des inneren Fördermittels (15) zusammenwirkt, wobei das innere Fördermittel (15) auf dem Zentrierelement (19) drehbar gelagert ist; wobei auch das innere Fördermittel (15) ausschließlich über das durch die Pumpe (2) geförderte Fluid (18) gelagert ist.

4. Pumpenanordnung (1) nach einem der vorhergehenden Patentansprüche, wobei das Gehäuse (6) an einer der ersten Stirnseite (9) gegenüberliegend angeordneten zweiten Stirnseite (22) des Rotors (8) eine mit der Druckseite (3) verbundene Druckleitung (24) aufweist, wobei die erste Fluidleitstruktur (20) über das Zentrierelement (19) mit der Druckleitung (24) verbunden ist.

5. Pumpenanordnung (1) nach Patentanspruch 4, wobei das innere Fördermittel (15) auf einer ersten äußeren Umfangsfläche (25) des Zentrierelements (19) drehbar gelagert ist, wobei eine zweite Fluidleitstruktur (26) zur Verbindung der Druckleitung (24) mit der ersten Fluidleitstruktur (20) zumindest teilweise auf der ersten äußeren Umfangsfläche (25) ausgebildet ist.

6. Pumpenanordnung (1) nach einem der vorhergehenden Patentansprüche, wobei das Gehäuse (6) an einer der ersten Stirnseite (9) gegenüberliegend angeordneten zweiten Stirnseite (22) des Rotors (8) eine mit der Saugseite (4) verbundene Saugleitung (27) aufweist, wobei eine Leckage des Fluids aus der ersten Fluidleitstruktur (20) über eine zweite äußere Umfangsfläche (28) des Rotors (8) hin zu der Saugleitung (27) erfolgt.

7. Pumpenanordnung (1) nach einem der vorhergehenden Patentansprüche, wobei der Rotor (8) und das äußere Fördermittel (11) zweiteilig ausgeführt aber drehfest miteinander verbunden sind.

8. Pumpenanordnung (1) nach einem der vorhergehenden Patentansprüche, wobei zumindest im Betrieb der Pumpenanordnung (1) rotierende Bauteile (8, 11, 15) der Pumpenanordnung (1) gegenüber feststehenden Bauteilen (6, 7, 19) der Pumpenanordnung (1) kontaktfrei angeordnet sind.

9. Pumpenanordnung (1) nach einem der vorhergehenden Patentansprüche, wobei der Rotor (8) eine sich zumindest in der axialen Richtung (10) erstreckende Durchgangsöffnung (35) aufweist, über die das Fluid (18) ausgehend von der Druckseite (3) hin zur ersten Fluidleitstruktur (20) förderbar ist, wobei die Durchgangsöffnung (35) einen größten Öffnungsquerschnitt (36) aufweist, der höchstens zwei % der Fläche der ersten Stirnseite (9) des Rotors (8) aufweist.

10. Pumpenanordnung (1) nach einem der vorhergehenden Patentansprüche, wobei die Pumpe (2)
- eine Gerotorpumpe oder eine Innenzahnradpumpe ist und das erste Förderprofil (13) eine erste Verzahnung und das zweite Förderprofil (17) eine zweite Verzahnung ist, wobei die Verzahnungen voneinander unterschiedliche Zähnezahlen aufweisen; oder
- eine Flügelzellen oder Rollenzellenpumpe ist;
und wobei eine erste Drehachse (29) des Rotors (8) und eine zweite Drehachse (30) des inneren Fördermittels (15) zueinander parallel und in der radialen Richtung (14) voneinander beabstandet angeordnet sind.

## Claims

1. Pump arrangement (1) at least comprising a pump (2) having a pressure side (3) and an intake side (4) and a drive unit (5) for the pump (2) which are arranged in a common housing (6), wherein the drive unit (5) is an axial flow electric drive which comprises a stator (7) which is connected to the housing (6) in a rotationally secure manner and a rotor (8) which is arranged so as to be able to be rotated with respect to the housing (6), wherein the rotor (8) is arranged with a first end face (9) opposite the stator (7) in an axial direction (10) and forms an outer conveying means (11) of the pump (2) and has on an inner circumferential face (12) a first conveying profile (13), wherein in a radial direction (14) inside the rotor (8) there is arranged an inner conveying means (15) of the pump (2) which has on an outer circumferential face (16) a second conveying profile (17) which cooperates with the first conveying profile (13) in order to convey a fluid (18); **characterized in that** the conveying means (11, 15) are arranged with spacing from the first end face (9); wherein the inner conveying means (15) is supported on a centering element (19) which is connected to the housing (6) in a rotationally secure manner; wherein at least the rotor (8) and the outer conveying means (11) are configured to be supported exclusively via the fluid (18) conveyed by the pump (2); wherein at least between the first end face (9) and the stator (7) a first fluid guiding structure (20) is arranged and connected to the pressure side (3) so that during operation of the electric drive a gap (21) between the first end face (9) and the stator (7) can be produced by the fluid (18).

2. Pump arrangement (1) as claimed in claim 1, wherein the rotor (8) extends between the first end face (9) facing the stator (7) and a second end face (22) which is arranged opposite in the axial direction (10) over a first width (23), wherein the first conveying profile (13) and the second conveying profile (17) each extend over a smaller second width (34), wherein the conveying profiles (13, 17) are arranged in the axial direction (10) with spacing from the first end face (9).

3. Pump arrangement (1) as claimed in either of the preceding claims, wherein the second conveying profile (17) cooperates with the first conveying profile (13) in order to drive the inner conveying means (15), wherein the inner conveying means (15) is rotatably supported on the centering element (19); wherein the inner conveying means (15) is also supported exclusively by means of the fluid (18) conveyed by the pump (2).

4. Pump arrangement (1) as claimed in one of the preceding claims, wherein the housing (6) has at a second end face (22), which is arranged opposite the first end face (9), of the rotor (8) a pressure line (24) which is connected to the pressure side (3), wherein the first fluid guiding structure (20) is connected to the pressure line (24) via the centering element (19).

5. Pump arrangement (1) as claimed in claim 4, wherein the inner conveying means (15) is rotatably supported on a first outer circumferential face (25) of the centering element (19), wherein a second fluid guiding structure (26) for connecting the pressure line (24) to the first fluid guiding structure (20) is formed at least partially on the first outer circumferential face (25).

6. Pump arrangement (1) as claimed in one of the preceding claims, wherein the housing (6) has at a second end face (22), which is arranged opposite the first end face (9), of the rotor (8) an intake line (27) which is connected to the intake side (4), wherein a leakage of the fluid from the first fluid guiding structure (20) is carried out via a second outer circumferential face (28) of the rotor (8) in the direction toward the intake line (27).

7. Pump arrangement (1) as claimed in one of the preceding claims, wherein the rotor (8) and the outer conveying means (11) are configured in two pieces but are connected to each other in a rotationally secure manner.

8. Pump arrangement (1) as claimed in one of the preceding claims, wherein at least components (8, 11, 15), which rotate during operation of the pump arrangement (1), of the pump arrangement (1) are arranged in a contact-free manner with respect to fixed components (6, 7, 19) of the pump arrangement (1).

9. Pump arrangement (1) as claimed in one of the preceding claims, wherein the rotor (8) has a through-opening (35) which extends at least in the axial direction (10) and via which the fluid (18) can be conveyed from the pressure side (3) toward the first fluid guiding structure (20), wherein the through-opening (35) has a largest opening cross section (36) which has a maximum of two % of the surface-area of the first end face (9) of the rotor (8).

10. Pump arrangement (1) as claimed in one of the preceding claims, wherein the pump (2)
- is a gerotor pump or an internal gear pump and the first conveying profile (13) is a first tooth arrangement and the second conveying profile (17) is a second tooth arrangement, wherein the tooth arrangements have mutually different numbers of teeth; or
- is a vane cell pump or a roller cell pump;
and wherein a first rotation axis (29) of the rotor (8) and a second rotation axis (30) of the inner conveying means (15) are arranged parallel with each other and spaced apart from each other in the radial direction (14).

## Revendications

1. Agencement de pompe (1), comprenant au moins une pompe (2) avec un côté refoulement (3) et un côté aspiration (4) et une unité d'entraînement (5) pour la pompe (2), qui sont agencés dans un boîtier commun (6), l'unité d'entraînement (5) étant un entraînement électrique à flux axial, qui comprend un stator (7) relié de manière solidaire en rotation au boîtier (6) ainsi qu'un rotor (8) agencé de manière rotative par rapport au boîtier (6), le rotor (8) présentant une première face frontale (9) disposée à l'opposé du stator (7) le long d'une direction axiale (10) et formant un moyen de transport externe (11) de la pompe (2) et présentant un premier profil de transport (13) sur une surface périphérique interne (12), un moyen de transport interne (15) de la pompe (2) étant agencé dans une direction radiale (14) à l'intérieur du rotor (8) et présentant un deuxième profil de transport (17) sur une surface périphérique externe (16), qui coopère avec le premier profil de transport (13) pour transporter un fluide (18) ; **caractérisée en ce que** les moyens de transport (11, 15) sont agencés à distance de la première face frontale (9) ; le moyen de transport interne (15) étant monté sur un élément de centrage (19) solidaire en rotation du boîtier (6) ; au moins le rotor (8) et le moyen de transport externe (11) étant conçus de façon à être supportés exclusivement par le fluide (18) transporté par la pompe (2) ; une première structure (20) de guidage de fluide étant agencée au moins entre la première face frontale (9) et le stator (7) et étant reliée au côté refoulement (3), de sorte qu'en cours de fonctionnement de l'entraînement électrique, un interstice (21 peut être créé entre la première face frontale (9) et le stator (7) par le fluide (18).

2. Agencement de pompe (1) selon la revendication 1, dans lequel le rotor (8) s'étend entre le premier côté frontal (9) tourné vers le stator (7) et un deuxième côté frontal (22) agencé à l'opposé le long de la direction axiale (10) sur une première largeur (23), le premier profilé de transport (13) et le deuxième profilé de transport (17) s'étendant chacun sur une deuxième largeur (34) plus petite, les profilés de transport (13, 17) étant agencés le long de la direction axiale (10) à distance du premier côté frontal (9).

3. Agencement de pompe (1) selon l'une des revendications précédentes, dans lequel le deuxième profilé de transport (17) coopère avec le premier profilé de transport (13) pour entraîner le moyen de transport interne (15), le moyen de transport interne (15) étant monté à rotation sur l'élément de centrage (19) ; le moyen de transport interne (15) étant également supporté exclusivement par le fluide (18) transporté par la pompe (2).

4. Agencement de pompe (1) selon l'une des revendications précédentes, dans lequel le boîtier (6) présente, sur une deuxième face frontale (22) du rotor (8) agencée à l'opposé de la première face frontale (9), une conduite de refoulement (24) reliée au côté refoulement (3), la première structure (20) de guidage de fluide étant reliée à la conduite de refoulement (24) via l'élément de centrage (19).

5. Agencement de pompe (1) selon la revendication 4, dans lequel le moyen de transport interne (15) est monté à rotation sur une première surface périphérique externe (25) de l'élément de centrage (19), une deuxième structure (26) de guidage de fluide destinée à relier la conduite de refoulement (24) à la première structure (20) de guidage de fluide étant réalisée au moins partiellement sur la première surface périphérique externe (25).

6. Agencement de pompe (1) selon l'une des revendications précédentes, dans lequel le boîtier (6) présente, sur une deuxième face frontale (22) du rotor (8) agencée à l'opposé de la première face frontale (9), une conduite d'aspiration (27) reliée au côté aspiration (4), une fuite du fluide se produisant depuis la première structure (20) de guidage de fluide vers la conduite d'aspiration (27) via une deuxième surface périphérique externe (28) du rotor (8).

7. Agencement de pompe (1) selon l'une des revendications précédentes, dans lequel le rotor (8) et le moyen de transport externe (11) sont réalisés en deux parties mais sont reliés entre eux de manière à ne pas pouvoir tourner.

8. Agencement de pompe (1) selon l'une des revendications précédentes, dans lequel, au moins pendant le fonctionnement de l'agencement de pompe (1), des composants rotatifs (8, 11, 15) de l'agencement de pompe (1) sont agencés sans contact par rapport à des composants fixes (6, 7, 19) de l'agencement de pompe (1).

9. Agencement de pompe (1) selon l'une des revendications précédentes, dans lequel le rotor (8) présente une ouverture de passage (35) s'étendant au moins dans la direction axiale (10), par laquelle le fluide (18) est apte à être transporté depuis le côté refoulement (3) vers la première structure (20) de guidage de fluide, l'ouverture de passage (35) présentant une section d'ouverture (36) la plus grande, qui représente au maximum deux % de la surface de la première face frontale (9) du rotor (8).

10. Agencement de pompe (1) selon l'une des revendications précédentes, la pompe (2) étant
- est une pompe gérotor ou une pompe à engrenages internes et le premier profil de transport (13) est une première denture et le deuxième profil de transport (17) est une deuxième denture, les dentures présentant des nombres de dents différents de l'une à l'autre ; ou
- est une pompe à palettes ou une pompe à rouleaux ;
et un premier axe de rotation (29) du rotor (8) et un deuxième axe de rotation (30) du moyen de transport interne (15) sont agencés de façon parallèle l'un à l'autre et de façon espacée l'un de l'autre dans la direction radiale (14).
